# EUROPÄISCHE PATENTSCHRIFT

(11) **EP 0 393 560 B1**
(45) Veröffentlichungstag und Bekanntmachung des Hinweises auf die Patenterteilung: **24.02.1993**
(21) Anmeldenummer: 90107199.3
(22) Anmeldetag: 17.04.1990
(51) Int. Cl.: F16L 41/06

(54) **Anbohrarmatur**
Tapping apparatus
Appareil de perçage

(30) Priorität: 18.04.1989 DE 3912669
(43) Veröffentlichungstag der Anmeldung: 24.10.1990
(73) Patentinhaber: LUDWIG FRISCHHUT GMBH, D-84494 Neumarkt-Sankt Veit (DE)
(72) Erfinder: Anders, Adelheid, D-7717 Immendingen/Baden (DE)
(74) Vertreter: Patentanwälte Westphal, Buchner, Mussgnug Neunert, Göhring

(56) Entgegenhaltungen:
- DE-A- 2 123 539
- DE-B- 1 188 387
- LU-A- 54 175

## Beschreibung

Die Erfindung betrifft eine Anbohrarmatur der im Oberbegriff des Hauptanspruchs angegebenen Art.

Solche Anbohrarmaturen dienen dazu, ein ein flüssiges oder gasförmiges Medium führendes Leitungsrohr, z. B. ein Wasserrohr, mit einer Bohrung für eine Zweigleitung zu versehen. Hierbei verbleibt das Gehäuse der Anbohrarmatur als Abzweiggehäuse zwischen Leitungsrohr und Zweigleitung.

Dieses mit dem Leitungsrohr bleibend verbindbare Gehäuse weist darum einerseits einen Anbohrkanal zum Einbringen und Führen des Bohrers und andererseits einen verschließbaren Anschlußstutzen für die Zweigleitung auf.

Da die Zweigleitung häufig in einem Zeitpunkt angeschlossen werden muß, in welchem das Leitungsrohr bereits das Medium, z. B. Wasser, führt, muß das Gehäuse der Anbauarmatur so ausgebildet sein, daß bei der Herstellung der Bohrung und insbesondere beim Zurückziehen des Bohrers kein Mediumsaustritt erfolgt. Aus diesem Grunde ist im Anbohrkanal zwischen dessen Ein- und Austrittsöffnung ein manuell betätigbares Ventil vorgesehen, mit welchem vor allem die Austrittsöffnung und damit die im Leitungsrohr hergestellte Bohrung solange verschlossen werden kann, bis die Zweigleitung angeschlossen ist.

Der Ventilklappenträger eines derartigen Ventils ist folglich nur für eine vergleichsweise kurze Zeit im Einsatz, während er im Betrieb, also nach Anschluß der Zweigleitung, nur noch dem Absperren der Zweigleitung dient.

Der Ventilklappenträger kann darum an sich relativ einfach aufgebaut sein.

Aus der DE-OS 2 123 539 ist eine Anbohrarmatur der in Betracht kommenden Gattung bekannt, bei welcher als Ventilkörper ein mittels einer Schraubspindel anhebbarer und hierbei um die Achse der Schraubspindel verschwenkbarer Ventilteller vorgesehen ist. Zur Erzeugung der Schwenkbewegung während des Ventiltellervorschubes ist eine schraubengangförmige Führungsnut notwendig, in welche der Ventilteller mit einer Führungsnocke eingreift. Diese Konstruktion ist hinsichtlich des Aufbaus und auch ihrer Funktion noch vergleichsweise aufwendig. Außerdem ist das Gehäuse relativ voluminös, da der weggeschwenkte Ventilteller zusätzlichen Raumbedarf hat.

Weniger Platzbedarf hat die Anbohrarmatur nach der DE-OS 31 19 579, von welcher die vorliegende Erfindung ausgeht. Als Ventilkörper ist hier eine schwenkbare Ventilklappe vorgesehen. Die Ventilklappe wird mittels einer von der Schraubspindel angetriebenen Zahnstange betätigt, welche in ein an der Ventilklappe vorgesehenes Zahnritzel eingreift. Auch diese Konstruktion ist noch zu aufwendig und wegen der ineinandergreifenden Verzahnungen, die offen im Inneren des vom Medium durchströmten Gehäuses liegen, störanfällig.

Der vorliegenden Erfindung liegt darum die Aufgabe zugrunde, die im Oberbegriff des Hauptanspruchs angegebene Anbohrarmatur so zu vereinfachen, daß sie bei ausreichender Abdichtung einfacher Handhabungen kostengünstig hergestellt werden kann und eine sichere Funktion gewährleistet.

Gelöst wird diese Aufgabe mit den im Kennzeichen des Hauptanspruchs angegebenen Merkmalen.

Die Grundidee der Erfindung besteht darin, als Ventilkörper ein sehr einfach aufgebautes zweiteiliges Element zu verwenden, nämlich einen mittels der Schraubspindel vorschiebbaren Träger, an welchem als Dichtelement eine aus flexiblem Material bestehende Ventilklappe angebracht ist, welche aus dem Anbohrkanal ohne Verwendung von Zahnrädern, Gelenken oder dgl. dank ihrer Materialeigenschaft geschwenkt werden kann. Um den Durchtritt des Bohrers im Bereich des Ventilklappenträgers zu ermöglichen, ist dieser mit einer dem Bohrkopfquerschnitt entsprechenden Bohreröffnung versehen, welche bei durch die Ventilklappe verschlossener Austrittsöffnung durch letztere selbst abgedichtet ist.

Wie mit Anspruch 2 angegeben ist, eignet sich als Ventilklappenmaterial ein Elastomer, in das zur Versteifung eine Metalleinlage integriert ist.

Um die Ventilklappe sicher von der Austrittsöffnung abheben zu können, ist diese gem. Anspruch 3 mit Befestigungshaken versehen, welche die Ventilklappe nach der ersten Betätigung am Ventilklappenträger festlegen.

Konstruktionsmaßnahmen zur Vereinfachung der Herstellung bei sicherer Funktion sind mit den Ansprüchen 4 und 5 angegeben.

Die Ansprüche 6 - 9 beziehen sich auf die Mittel zur Befestigung des Gehäuses an dem Leitungsrohr.

Im übrigen ist der Gegenstand der Erfindung anhand verschiedener Ausführungsbeispiele, die in den Figuren 1 bis 4 der Zeichnung dargestellt sind, nachstehend im einzelnen erläutert.

In der Zeichnung zeigen:
Fig. 1 Axialschnitt einer erfindungsgemäßen Anbohrarmatur in der Ausgangsposition bei strichpunktiert angedeutetem Bohrer, wobei das Gehäuse mit dem Leitungsrohr mittels einer Schelle mit Schrauben verbunden ist,
Fig. 2 Axialschnitt der erfindungsgemäßen Anbohrarmatur gemäß Fig. 1 in einer zweiten Position, in welcher der Bohrer zurückgezogen und der Ventilkörper geringfügig angehoben ist, wobei das Gehäuse mittels eines Bügels am Leitungsrohr befestigt ist,
Fig. 3 Axialschnitt der erfindungsgemäßen Anbohrarmatur gemäß Fig. 1 und 2 in einer Position, in welcher das Anbohrgerät entfernt, das Ventil geschlossen und das Gehäuse für den Anschluß der Zweigleitung vorbereitet ist, wobei das Gehäuse mit Keilbügeln und einer Schelle mit dem Leitungsrohr verbunden ist und
Fig. 4 Schnitt längs der Linie IV-IV aus Fig. 3 der erfindungsgemäßen Anbohrarmatur, wobei das Gehäuse allerdings anders als nach Fig. 3 mit dem Leitungsrohr verschweißt ist.

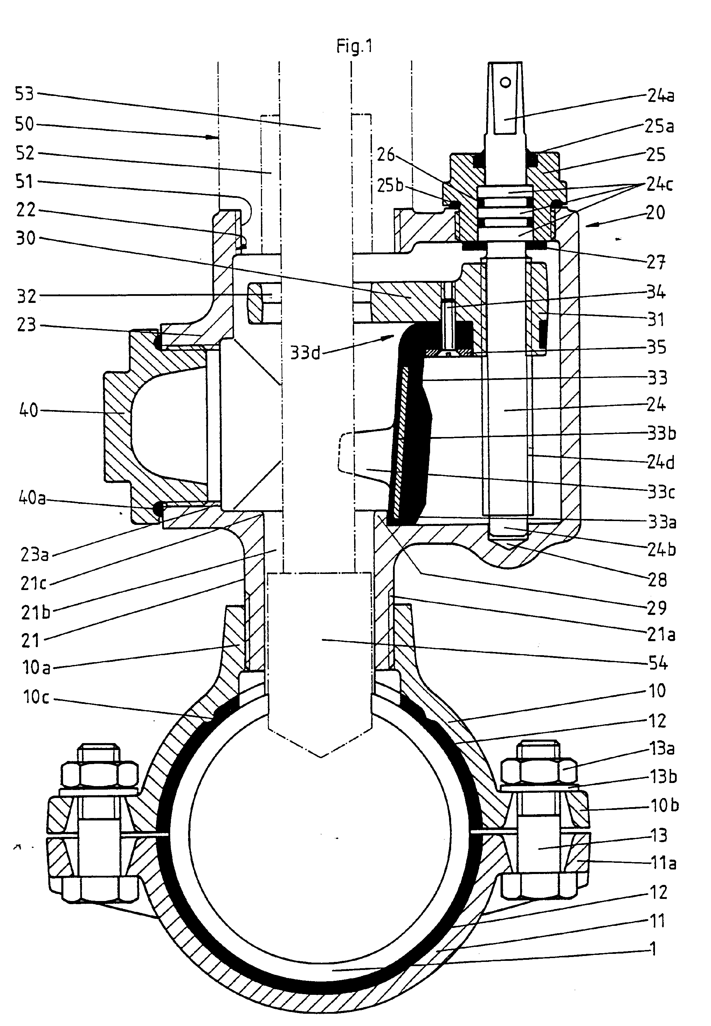

Die Figuren 1 bis 4 zeigen jeweils im oberen Teil ein identisches Ausführungsbeispiel der erfindungsgemäßen Anbohrarmatur in verschiedenen Arbeitspositionen. Im unteren Teil, also im Bereich des Leitungsrohres 1, sind in den Figuren 1 bis 4 vier verschiedene Befestigungsmöglichkeiten beispielhaft gezeigt.

Zum besseren Verständnis von Aufbau und Arbeitsweise der Anbohrarmatur ist zunächst das Gehäuse 20 mit seinen Elementen unter Bezugnahme auf das Anbohrgerät 50 erläutert, während auf die unterschiedlichen Mittel zur Befestigung der Anbohrarmatur am Leitungsrohr 1 erst im Anschluß an diese Beschreibung im Zusammenhang eingegangen ist.

Die Anbohrarmatur besteht aus einem in der Regel aus Eisenguß hergestellten Gehäuse 20, das auf der Seite des Leitungsrohres 1 einen Gehäusestutzen 21 und auf der gegenüberliegenden Seite eine Bohrung, vorzugsweise eine Gewindebohrung, 22 besitzt. Die Gewindebohrung 22 dient der Aufnahme des Schraubansatzes 51 eines Anbohrgerätes 50. Der Gehäusestutzen 21 seinerseits weist eine Bohrung 21b auf, welche dem Durchtritt des von der Bohrstange 53 getragenen Bohrkopfes 54 des Anbohrgerätes 50 dient. Gewindebohrung 22 und Bohrung 21b des Gehäusestutzens 21 müssen darum koxial zueinander angeordnet sein und bilden Eintritts- und Austrittsöffnung eines das Gehäuse 20 durchsetzenden Anbohrkanales,durch welchen der Bohrer mit Bohrstange 53 und Bohrkopf 54 bis zum Leitungsrohr 1 hindurchgeführt wird.

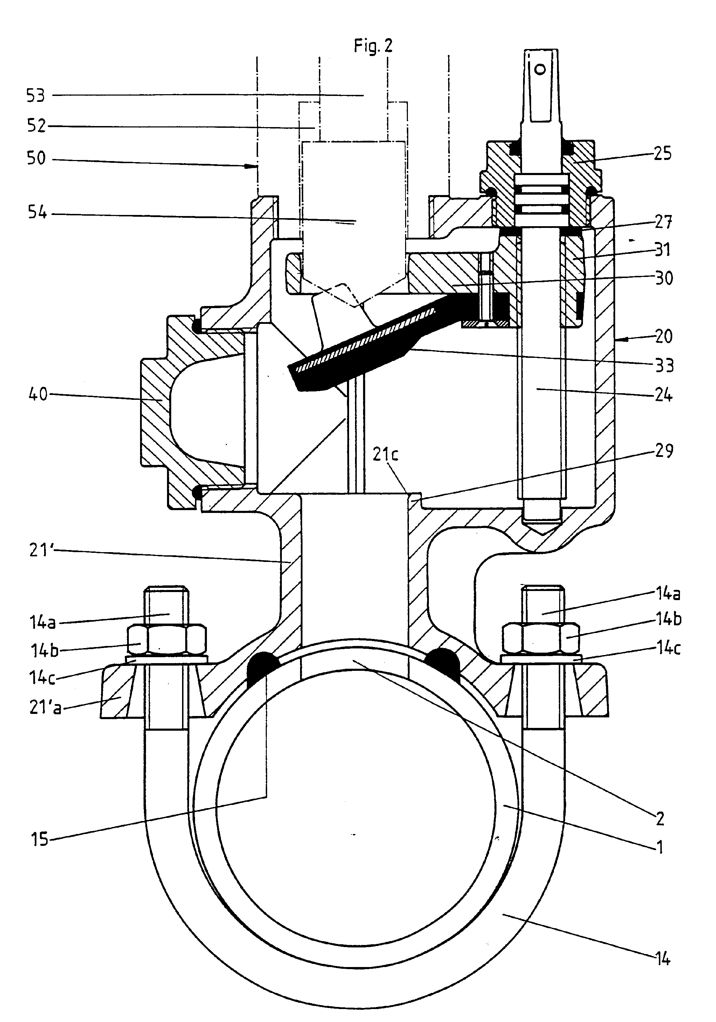

Innerhalb des Gehäuses 20 ragt in den so definierten Anbaukanal ein aus Ventilklappenträger 30 und Ventilklappe 33 bestehender Ventilkörper. Der Ventilklappenträger 30 sitzt mit einer einstückigen Spindelmutter 31 auf der Schraubspindel 24, welche achsparallel zum Anbohrkanal bzw. zur Bohrstange 53 verläuft. Die um ihre Achse verdrehbare Schraubspindel 24 ist einerends in einer Lagebüchse 25 gelagert. Zur Betätigung der Schraubspindel 24 ist diese mit einem Vierkant 24a versehen, auf welchen ein nicht dargestellter Betätigungshebel oder ein Betätigungsrad aufgesetzt werden kann. Die Lagerbüchse 25, die in eine Gewindebohrung des Gehäuses 20 eingeschraubt ist, ist gegenüber letzterem mit einem O-Ring 25b abgedichtet, wobei die Schraubenspindel 24 einem in der Büchse 25 vorgesehenen Schmutzabstreifer 25a durchsetzt. Der Lagerung der Schraubenspindel 24 innerhalb der Lagerbuchse 25 dienen Lagerringe 24c, zwischen welchen Dichtungsringe 26 angeordnet sind. Im Gehäuseinneren ist die Lagerbüchse 25 ferner mit einer Dicht- und Dämpfungsscheibe 27 versehen, an welcher die Spindelmutter 31 in der Position gemäß Fig. 2 anliegt.

Das untere Ende der Schraubspindel 24 ist als Lagerzapfen 24b ausgebildet und in einem Sackloch 28 des Gehäuses 20 verdrehbar gelagert.

Der mittels der Schraubspindel 24 höhenverstellbare Ventilklappenträger 30 weist eine dem Durchtritt des Bohrkopfes 54 gestattende Bohreröffnung 32 auf. Durch diese Konstruktionsmaßnahme erübrigen sich in sehr einfacher Weise die bei bekannten Konstruktionen notwendigen Maßnahmen zum Wegschwenken des massiven Ventilkörpers aus dem Anbohrkanal.

Bei der erfindungsgemäßen Konstruktion ist stattdessen die an der Unterseite des Ventilklappenträgers 32 mit Schrauben 34 und Druckplatte 35 befestigte Ventilklappe 33 weggeschwenkt. Die Ventilklappe selbst besteht aus einem Elastomer mit gummielastischen Eigenschaften, so daß sie einerseits hervorragende Dichteigenschaften hat und andererseits selbst ein das Wegschwenken ermöglichendes elastisches Gelenk 33d bildet. Da dieses Ventil ohnehin nur wenigen Lastwechseln ausgesetzt ist, ist eine aufwendige Gelenkkonstruktion überflüssig.

In der Ausgangsposition, in welcher der Anbohrkanal für das Einbringen des Bohrers offengehalten werden muß, liegt die Ventilklappe 33 mit ihrem äußeren freien Rand an einem in das Innere des Gehäuses ragenden Anschlag 29 kraftschlüssig an.

Nachdem, wie mit Fig. 1 angedeutet ist, im Leitungsrohr 1 mit dem Bohrkopf 54 die erforderliche Bohrung hergestellt ist, kann dieser in die in Fig. 2 angedeutete Position zurückgezogen werden, in welcher der Bohrkopf 54 von der Bohrkopfaufnahme 52 des Anbohrgerätes 50 aufgenommen wird.

In dieser Position ist der Ventilklappenträger 30 mit Hilfe der Schraubspindel 24 anzuheben, bis seine Spindelmutter 31 mit ihrer Stirnfläche an der Dicht- und Dämpfungsscheibe 27 der Lagerbüchse 25 anliegt. Bei Anheben des Ventilklappenträgers 30 um diese Wegstrecke gelangt die Ventilklappe 33 mit dem Anschlag 29 außer Eingriff und schnellt aufgrund der Materialelastizität in die in Fig. 2 gezeigte Lage.

Beim Anbohren des Leitungsrohres 1 und insbesondere beim Zurückziehen des Bohrers 53/54 in die Position gemäß Fig. 2 gelangt das in der Regel innerhalb des Leitungsrohres 1 unter Druck stehende Medium in das Innere des Gehäuses 20. Um ein Austreten des Mediums, z. B. von Leitungswasser oder Gas, zu verhindern, muß das Gehäuse 20 gegenüber dem Außenbereich abgedichtet sein. Aus diesem Grund ist die Gewindebohrung 23a des seitlichen Gehäusestutzens 23 mit einem Verschlußstopfen 40 und mit eingelegten Dichtungsring 40a flüssigkeits- bzw. gasdicht verschlossen. Ebenso muß der Schraubansatz 51 des Anbohrgerätes 50 mit der Gewindebohrung 22 ggf. unter Verwendung weiterer Dichtmittel flüssigkeits- oder gasdicht verbunden sein.

Um das Anbohrgerät 50 entfernen und den Gehäusestutzen 23 öffnen zu können, ist ein Verschluß der Bohrung 21b des Gehäusestutzens 21 bzw. 21′, 21˝ oder 21˝′ erforderlich.

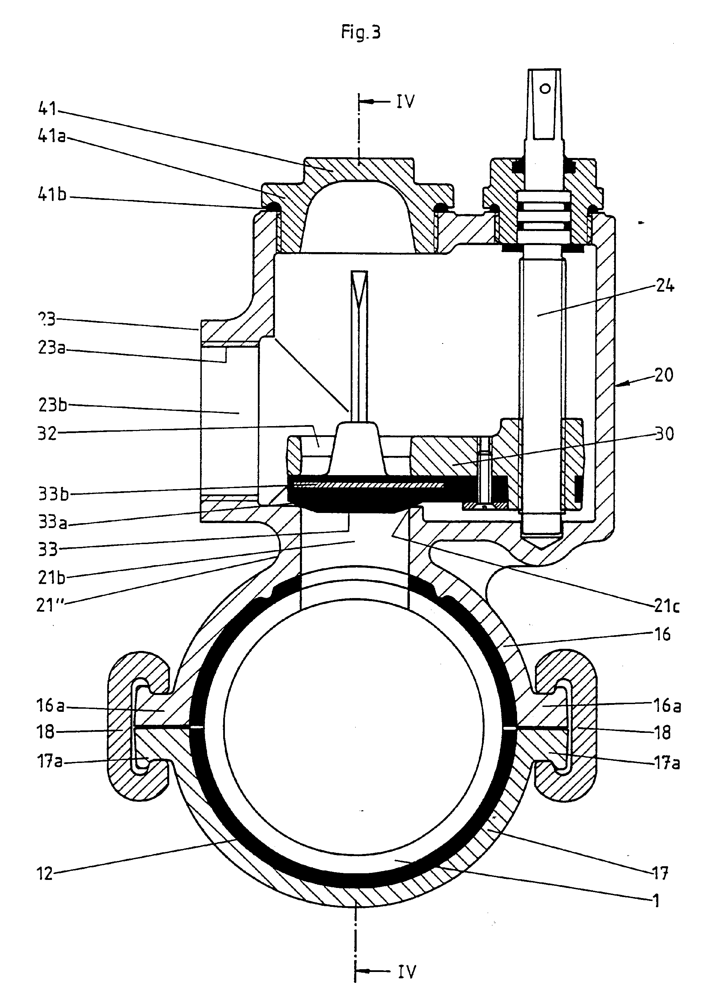

Diese Anordnung ist mit der Darstellung gemäß Fig. 3 veranschaulicht. Durch Verdrehen der Schraubspindel 24 wird der Ventilkörper, bestehend aus Ventilklappenträger 30 und Ventilklappe 33, in die in Fig. 3 untere Position gebracht, bis die konischen Dichtflächen 33a der Ventilklappe 33 am Ventilsitz 21c der Bohrung 21b dichtend anliegen. Der erforderliche Dichtungsdruck wird mittels der Schraubspindel 24 erzeugt und mit dem Ventilklappenträger 30 auf die Ventilklappe 33 übertragen. Um eine gleichmäßige Kraftübertragung im Bereich der Bohreröffnung 32 zu gewährleisten, ist die aus Elastomer bestehende Ventilklappe 33 mit einer Metalleinlage 33b verstärkt.

Nach Entfernen des Anbohrgerätes 50 wird die Gewindebohrung 22 des Gehäuses 20 mit einem Verschußstopfen 41 verschlossen, wobei ein zwischen dem Flansch 41a und dem Rand der Bohrung 22 eingelegter Dichtungsring 41 b für die erforderliche Flüssigkeits- bzw. Gasdichheit sorgt.

Hierauf kann nach Entfernen des Stopfens 40 gemäß Fig. 1 und 2 eine nicht dargestellte Zweigleitung in das Innengewinde 23a der Bohrung 23b eingeschraubt werden.

Die Verbindung zwischen Zweigleitung und Leitungsrohr 1 wird durch Anheben des Ventilklappenträgers 30 mit Ventilklappen 33 mittels der Schraubspindel 24 bewerkstelligt.

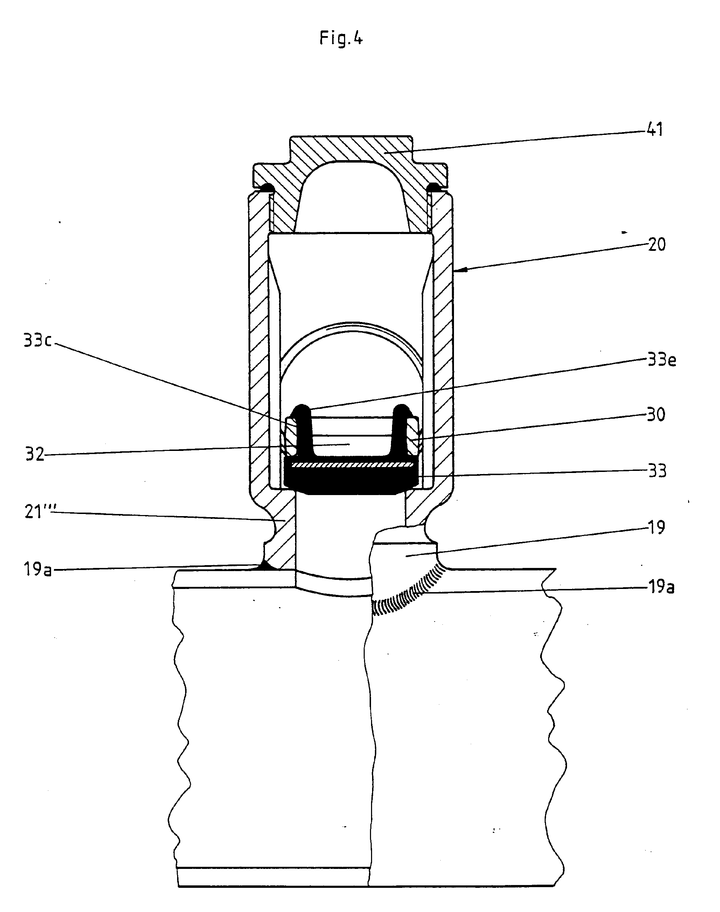

Wie der um 90° gedrehte Schnitt gemäß Fig. 4 verdeutlicht, verhindern Befestigungshaken 33c, welche mit ihren Mitnahmenasen 33e den oberen Rand der Bohreröffnung 32 übergreifen, daß die Ventilklappe 33 in die z. B. in Fig. 2 gezeigte Position zurückfällt. Der Ventilklappenträger 30 kann in die Fig. 2 gezeigte Position zurückgefahren werden, wobei sich die Ventilklappe 33 anders als bei der Darstellung gemäß Fig. 2 in gleicher Weise wie in Fig. 3 und 4 parallel zum Ventilklappenträger 30 erstreckt. Das Ventil hat damit bis zu einem etwaig notwendig werdenden Absperren der angeschlossenen Zweigleitung seine Aufgabe erfüllt.

Unterschiedliche Befestigungsmöglichkeiten der Anbohrarmatur sind jeweils in den Figuren 1 bis 4 veranschaulicht.

Bei der Ausführungsform gemäß Fig. 1 ist auf das Außengewinde 21a des Gehäusestutzens 21 ein Schellenoberteil 10 aufgeschraubt, daß mit dem Schellenunterteil 11 zu einer die Rohrleitung 1 umfassenden Schelle ergänzt wird, wobei die seitlich abstehenden aneinander anliegenden Flansche 10b und 11a der Schellenunter- und oberteile 10 und 11 mit Hilfe von Schraubbolzen 13, Muttern 13a bei Verwendung von Unterlegscheiben 13b miteinander verbunden sind.

Die Innenflächen der Schellenober- und unterteile 10, 11 sind mit einer zweigeteilten Dichtungsmanschette 12 versehen, welche für einen flüssigkeits- oder gasdichten Abschluß im Bereich des in die Rohrleitung 1 eindringenden Bohrkopfes 54 sorgt. Ein den Bohrkopf 54 ringförmig umgebender Vorsprung 10c auf der Innenfläche der Schelle 10 erhöht in diesem Abschnitt den Dichtungsdruck und verbessert damit die Dichtheit.

Eine zweite Auführungsform der Befestigungseinrichtung ist in Fg. 2 veranschaulicht, bei welcher der Gehäusestutzen 21′ selbst an seinem dem Leitungsrohr 1 zugewandten Ende zu einem Flansch 21′a verbreitert ist, in dessen Bohrungen ein das Leitungsrohr 1 umfassender Bügel 14 mit seinen beidendig vorgesehenen Gewindezapfen 14a eingesetzt ist, welche mit Muttern 14b unter Verwendung von Unterlegscheiben 14c an dem Flansch 21′a festgelegt sind. Bei dieser Ausführungsform sorgt ein an der Flanschunterseite eingelegter Dichtring 15 für einen flüssigkeits- oder gasdichten Abschluß der in das Leitungsrohr 1 eingebrachten Bohrung 2.

Eine der Befestigungsform gemäß Fig. 1 ähnliche Möglichkeit ist mit Fig. 3 veranschaulicht. Der Gehäusestutzen 21˝ ist hier einstückig mit dem Schellenoberteil 16 verbunden, das mit dem Schellenunterteil 17 zu einer das Rohr 1 umfassenden Verbindungsschelle ergänzt wird. Ober- und Unterteil besitzen radial abstehende flanschartige Keilansätze 16a, 17a, auf welche Keilbügel 1 aufgeschlagen sind. Diese schraubenlose Verbindung ist insbesondere für den Einsatz im Tiefbau geeignet.

Nicht zuletzt kann auch der Gehäusestutzen 21˝′ mit einem Schweißansatz 19 ausgestattet sein, der, wie mit der Schweißnaht 19a in Fig. 4 angedeutet ist, mit dem Leitungsrohr 1 unlösbar verbunden ist.

### Figurenlegende

1 Leitungsrohr
2 Bohrung
10 Schellenoberteil
   10a Stutzenaufnahme
   10b Flansch
   10c Ringvorsprung
11 Schellenunterteil
   11a Flansch
12 Dichtmanschette
13 Schraubbolzen
   13a Mutter
   13b Unterlegscheibe
14 Bügel
   14a Gewindezapfen
   14b Muttern
   14c Unterlegscheiben
15 Dichtring
16 Schellenoberteil
   16a flanschartiger Keilansatz
17 Schellenunterteil
   17a flanschartiger Keilansatz
18 Keilbügel
19 Schweißansatz
   19a Schweißnaht
20 Gehäuse
21, 21′
   21˝ Gehäusestutzen
   21˝′
   21a Außengewinde
   21b Bohrung
   21c Ventilsitz
   21′a Flansch
22 Gewindebohrung
23 Gehäusestutzen
   23a Innengewinde
   23b Bohrung
24 Schraubspindel
   24a Vierkant
   24b Lagerzapfen
   24c Lager- und Dichtringe
   24d Gewinde
25 Lagerbüchse
   25a Schmutzabstreifer
   25b Dichtungs-O-Ring
26 Dichtungsringe
27 Dicht- und Dämpfungsscheibe
28 Sackloch
29 Anschlag
30 Ventilklappenträger
31 Spindelmutter
32 Bohreröffnung
33 Ventilklappe
   33a Dichtfläche
   33b Metallanlage
   33c Befestigungshaken
   33d elastisches Gelenk
   33e Mitnahmenasen
34 Schrauben
35 Druckplatte
40 Verschußstopfen
   40a Dichtring
41 Verschlußstopfen
   41a Flansch
   41b Dichtring
50 Anbohrgerät
51 Schraubansatz
52 Bohrkopfaufnahme
53 Bohrstange
54 Bohrkopf
165

## Patentansprüche

1. Anbohrarmatur zur Herstellung einer Bohrung in einem ein flüssiges oder gasförmiges Medium führenden Leitungsrohr sowie zum Anschluß einer Zweigleitung, bestehend aus einem mit dem Leitungsrohr bleibend verbindbaren Gehäuse, welches einen Anbohrkanal mit miteinander fluchtenden Eintritts- und Austrittsöffnungen zum Einbringen und zur Führung eines Bohrers bis zum Leitungsrohr sowie einen verschließbaren Anschlußstutzen für die Zweigleitung aufweist, wobei im Anbohrkanal ein mittels einer parallel zum Kanal verlaufenden Spindel verschwenkbarer Ventilkörper vorgesehen ist, der dem Verschluß, mindestens der Austrittsöffnung dient, dadurch gekennzeichnet, daß der Ventilkörper einen starren Ventilklappenträger (30) mit einer auf der Spindel (24) sitzenden Spindelmutter (31) und einer koaxial zur Eintritts- und Austrittsöffnung angeordneten Bohreröffnung (32), deren Querschnitt demjenigen des Bohrkopfes (54) entspricht, aufweist und daß an der der Austrittsöffnung zugewandten Seite des Verschlußklappenträgers (30) eine aus flexiblem Material bestehende, verschwenkbare Ventilklappe (33) einseitig befestigt ist, welche bei eingesetztem Bohrer (53, 54) aus dem Anbohrkanal weggeschwenkt und hinter einem Anschlag (29) des Gehäuses (20) festgelegt und bei entferntem Bohrer (53, 54) die Austrittsöffnung und/oder die Bohreröffnung (32) des Ventilklappenträgers (30) verschließt.

2. Anbohrarmatur nach Anspruch 1, dadurch gekennzeichnet, daß die Ventilklappe (33) aus einem Elastomer besteht, mit einer vorzugsweise in das Material integrierte Metalleinlage (33b) verstärkt ist und mit Hilfe von Schrauben (34) und einer Druckplatte (35) an dem Ventilklappenträger (30) derart befestigt ist, daß die Ventilklappe (33) im Bereich zwischen Druckplatte (35) und der Bohreröffnung (32) ein elastisches Gelenk (33d) bildet.

3. Anbohrarmatur nach Anspruch 1 oder 2, dadurch gekennzeichnet, daß die Ventilklappe (33) beidseitig vorzugsweise mit dieser einstückige Befestigungshaken (33c) aufweist, welche bei paralleler Ausrichtung zum Ventilklappenträger (30) dessen Bohreröffnung (32) durchsetzen und an diesem mit Mitnahmenasen (32e) festgelegt sind.

4. Anbohrarmatur nach einem der Ansprüche 1 bis 3, dadurch gekennzeichnet, daß die Schraubspindel (24) einerends in einer Lagerbüchse (25), die in das aus Eisenguß bestehende Gehäuse (20) eingeschraubt und mit Dichtungen (25a, 25b, 26) abgedichtet ist, und andererends mit einem Zapfen (24b) in einer Bohrung (28) des Gehäuses (20) drehbar gelagert ist.

5. Anbohrarmatur nach Anspruch 4, dadurch gekennzeichnet, daß die Unterseite der Lagerbüchse (25) mit einer von der Schraubspindel (24) durchgesetzten Dicht- und Dämpfungsscheibe (27) versehen ist.

6. Anbohrarmatur nach einem der Ansprüche 1 bis 5, dadurch gekennzeichnet, daß der dem Leitungsrohr (1) zugewandte Gehäusestutzen (21, 21˝) mit einem Schellenoberteil (10, 16) verbunden ist, das mit einem Schellenunterteil (11, 17) mittels Schrauben (13), Keilbügeln (18) oder dgl. verbindbar ist, wobei die aus Ober- und Unterteil (10, 16; 11, 17) bestehende Schelle das Leitungsrohr (1) umfaßt.

7. Anbohrarmatur nach einem der Ansprüche 1 bis 5, dadurch gekennzeichnet, daß der dem Leitungsrohr (1) zugewandte Gehäusestutzen (21′) einen Flansch (21′a) aufweist, mit dem ein das Leitungsrohr (1) umfassender Bügel (14) verbindbar, vorzugsweise verschraubbar ist.

8. Anbohrarmatur nach Anspruch 6 oder 7, dadurch gekennzeichnet, daß die dem Leitungsrohr (1) zugewandten Innenflächen der Schellenteile (10, 11, 16, 17) Dichtmittel (12, 15) aufweisen, welche eine flüssigkeits- oder gasdichte Verbindung mit dem Inneren des Leitungsrohrs (1) und des Gehäuses (20) nach Herstellung der Bohrung gewährleisten.

## Claims

1. A drilling armature for the production of a drilling in a line pipe carrying a liquid or gaseous medium and also for the connection of a branch pipe, comprising a casing which can be permanently connected to the line pipe and which has a drilling channel having aligned inlet and outlet openings for the introduction and guidance of a drill as far as the line pipe and also a closable connecting spigot for the branch pipe, the drilling channel having a valve member which can be pivoted by means of a spindle extending parallel with the channel and which is used for the closure of at least the outlet opening, characterized in that the valve member has a rigid valve flap support (30) having a spindle nut (31) disposed on the spindle (24) and a drill opening (32) which is disposed coaxially with the inlet and outlet opening and whose cross-section corresponds to that of the drill head (54), and attached on one side to that side of the closure flap support (30) which is adjacent the outlet opening is a pivotable valve flap (33) which is made of a flexible material and which when the drill (53, 54) is inserted pivots away out of the drilling channel and is located behind a stop (29) of the casing (22) and which when the drill (53, 54) is removed closes the outlet opening and/or the drill opening (32) of the valve flap support (30).

2. A drilling armature according to claim 1, characterized in that the valve flap (33) is made from an elastomer and is reinforced with a metal insert (33b) preferably integrated in the material and is so attached to the valve flap carrier (30) by means of screws (34) and a pressure plate (35) that the valve flap (33) forms a resilient joint (33d) in the zone between the pressure plate (35) and the drill opening (32).

3. A drilling armature according to claims 1 or 2, characterized in that the valve flap (33) has on both sides attaching hooks (33c) which are preferably unitary therewith and which when aligned parallel with the valve flap support (30) extend through its drill opening (32) and are located on the valve flap support with entraining lugs (32e).

4. A drilling armature according to one of claims 1 to 3, characterized in that the screw spindle (24) is pivotably mounted at one end in a bearing bush (25) screwed into the cast iron casing (20) and sealed with seals (25a, 25b, 26) and at the other end via a pin (24b) in a bore (28) of the casing (20).

5. A drilling armature according to claim 4, characterized in that the underside of the bearing bush (25) has a sealing and damping disc (27) through which the screw spindle (24) extends.

6. A drilling armature according to one of claims 1 to 5, characterized in that the casing spigot (21, 21˝) adjacent the line pipe (1) is connected to a clip upper part (10, 16) which can be connected via screws (13), wedge stirrups (18) or the like to a clip lower part (11, 17), the clip consisting of upper and lower parts (10, 16; 11, 17) engaging around the line pipe (1).

7. A drilling armature according to one of claims 1 to 5, characterized in that the casing spigot (21′) adjacent the line pipe (1) has a flange (21′a) to which a bowed member (14) engaging around the line pipe (1) can be connected, preferably screwed.

8. A drilling armature according to one of claims 6 or 7, characterized in that the inner faces of the clip parts (10, 11, 16, 17) adjacent the line pipe (1) have sealing means (12, 15) which ensure that after the drilling has been made there is a liquid-tight or gas-tight connection to the interior of the line pipe (1) and the casing (20).

## Revendications

1. Soupape perçable pour le perçage d'un alésage dans une canalisation conduisant un milieu liquide ou gazeux ainsi que pour le raccordement d'une conduite dérivée, comprenant un carter qui peut être raccordé de manière permanente à la canalisation et présente un canal de perçage avec des ouvertures d'entrée et de sortie alignées pour l'introduction et le guidage d'un foret jusqu'à la canalisation ainsi qu'une tubulure de raccordement obturable pour la conduite dérivée, dans le canal de perçage étant prévu un corps de soupape qui peut être pivoté au moyen d'une broche orientée parallèlement au canal et sert à l'obturation d'au moins l'ouverture de sortie, **caractérisé en ce** que le corps de soupape comporte un support de clapet de soupape (30) rigide avec un écrou à broches (31) monté sur la broche (24) et une ouverture de foret (32) disposée coaxialement par rapport aux ouvertures d'entrée et de sortie, dont la section transversale correspond à celle de la tête de perçage (54), et que sur le côté du support de clapet de soupape (30) dirigé vers l'ouverture de sortie est fixé un clapet de soupape (33) pivotant constitué d'un matériau flexible qui, lorsque le foret (53, 54) est engagé, est pivoté hors du canal de perçage et arrêté derrière une butée (29) du carter (20) et qui ferme l'ouverture de sortie et/ou l'ouverture de foret (32) du support de clapet de soupape (30) lorsque le foret (53, 54) est retiré.

2. Soupape perçable selon la revendication 1, caractérisée en ce que le clapet de soupape (33) est constitué d'un élastomère, renforcé par une couche intermédiaire métallique (33b) de préférence intégrée dans le matériau, et fixé sur le support de clapet de soupape (30) à l'aide de vis (34) et d'une plaque d'appui (35) de telle façon que le clapet de soupape (33) forme une articulation élastique (33d) dans la région entre la plaque d'appui (35) et l'ouverture de foret (32).

3. Soupape perçable selon l'une des revendications 1 ou 2, caractérisée en ce que le clapet de soupape (33) présente de chaque côté des crochets de fixation (33c), de préférence réalisés en une seule pièce avec ledit clapet, qui, orientés parallèlement par rapport au support de clapet de soupape (30), traversent l'ouverture de foret (32) de celui-ci et sont bloqués sur ledit support de clapet de soupape au moyen de taquets d'entraînement (32e).

4. Soupape perçable selon l'une des revendications 1 à 3, caractérisée en ce que la broche filetée (24) est montée de manière tournante à l'une de ses extrémités dans un coussinet (25) vissé dans le carter (20) en fonte et rendu étanche avec des anneaux d'étanchéité (25a, 25b, 26) et à l'autre extrémité, avec un tourillon (24b), dans un alésage (28) du carter (20).

5. Soupape perçable selon la revendication 4, caractérisée en ce que la face inférieure du coussinet (25) est munie d'une rondelle d'étanchéité et d'amortissement (27) traversée par la broche filetée (24).

6. Soupape perçable selon l'une des revendications 1 à 5, caractérisée en ce que la tubulure de carter (21, 21˝) tournée vers la canalisation (1) est raccordée à un élément de collier supérieur (10, 16) lequel peut être rattaché à un élément de collier inférieur (11, 17) au moyen de boulons (13), d'étriers à clavette (18) ou analogues, le collier constitué des éléments supérieur et inférieur (10, 16; 11, 17) enveloppant la canalisation (1).

7. Soupape perçable selon l'une des revendications 1 à 5, caractérisée en ce que la tubulure de carter (21′) tournée vers la canalisation (1) comporte une bride (21′a) qui permet le raccordement, de préférence le vissage, d'un étrier (14) enveloppant la canalisation (1).

8. Soupape perçable selon l'une des revendications 6 ou 7, caractérisée en ce que les surfaces intérieures des éléments de collier (10, 11, 16, 17) tournées vers la canalisation (1) comportent des moyens d'étanchéité (12, 15) qui assurent un assemblage étanche aux liquides ou aux gaz avec l'intérieur de la canalisation (1) et du carter (20) après la réalisation de l'alésage.
